(19) Europäisches Patentamt
European Patent Office
Office européen des brevets

(11) **EP 3 578 809 B1**

(12) **EUROPÄISCHE PATENTSCHRIFT**

(45) Veröffentlichungstag und Bekanntmachung des Hinweises auf die Patenterteilung:
**01.05.2024 Patentblatt 2024/18**

(21) Anmeldenummer: **19166163.6**

(22) Anmeldetag: **29.03.2019**

(51) Internationale Patentklassifikation (IPC):
**F03D 9/25** (2016.01)   **G06F 30/00** (2020.01)
**G06F 119/06** (2020.01)

(52) Gemeinsame Patentklassifikation (CPC):
**F03D 9/257; G06F 30/00;** F05B 2240/95;
F05B 2240/96; F05B 2260/84; F05B 2270/20;
G06F 2119/06; Y02E 10/72; Y02E 10/727;
Y02E 40/70; Y02E 60/00; Y04S 10/50; Y04S 40/20

(54) **ANORDNUNGSOPTIMIERUNG VON EINER VIELZAHL VON WINDENERGIEANLAGEN**

OPTIMISATION OF A PLURALITY OF WIND TURBINES

OPTIMISATION D'AGENCEMENT D'UNE PLURALITÉ D'ÉOLIENNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2018 DE 102018113633**

(43) Veröffentlichungstag der Anmeldung:
**11.12.2019 Patentblatt 2019/50**

(73) Patentinhaber: **RWE Offshore Wind GmbH**
**45141 Essen (DE)**

(72) Erfinder:
• **BARTMINN, Daniel**
**25335 Elmshorn (DE)**
• **ZIPFEL, Bernadette**
**21109 21109 Hamburg (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
EP-A1- 2 463 794       CN-A- 104 077 435
US-A1- 2010 138 201    US-A1- 2014 039 843

• CHRISTOPHER N. ELKINTON ET AL: "Offshore Wind Farm Layout Optimization (OWFLO) Project: Preliminary Results", PROCEEDINGS WINDPOWER 2006 CONFERENCE AND EXHIBITION, 1. Juni 2006 (2006-06-01), XP055022701, Pittsburgh, PA

## Beschreibung

### Gebiet

Beispielhafte Ausführungsformen der Erfindung betreffen das Ermitteln einer optimierten Anordnung einer Vielzahl von Windenergieanlagen, die insbesondere von einem Windpark, beispielsweise ein Offshore-Windpark, umfasst sind.

### Hintergrund

Insbesondere für Windparks, die eine Vielzahl von Windenergieanlagen umfassen, ist es mittlerweile üblich, die Vielzahl von Windenergieanlagen derart anzuordnen, dass der Windertrag und damit verbunden die von der Vielzahl von Windenergieanlage erzeugte Menge elektrischer Energie gegenüber einer willkürlichen Anordnung der Windenergieanlagen verbessert ist.

Grundsätzlich gilt, dass mit zunehmender Höhe das sogenannte Windprofil ansteigt, und somit mehr Wind geerntet werden kann, wodurch gegenüber einer Positionierung einer Windturbine einer Windenergieanlage in einer geringeren Höhe mehr elektrische Energie erzeugt werden kann. Die Höhe, in der eine Windturbine einer Windenergieanlage positioniert wird, wird auch mit Nabenhöhe bezeichnet.

Eine effiziente Anordnung von Offshore und/oder Onshore Windparks hat insbesondere zum Ziel, CAPEX (Capital Expenditure; auf Deutsch: Investitionskosten) Kosten zu reduzieren und den Energieertrag zu maximieren. Wenn Windenergieanlagen eines Windparks alle unterschiedlich ausgestaltet sind in ihren Strukturen, sind insbesondere die Fertigung der Elemente und auch die Montage der jeweiligen Windenergieanlage aufwendig, da die Windenergieanlagen jeweils komplexer sind.

Dazu werden z. B. bei Offshore-Windenergieanlagen Windturbinen eingesetzt, deren Nabenhöhen dahingehend optimiert sind, dass die Blattspitze mit genügend Freiraum über der Installation einer Hauptzugangsplattform, welche über der sogenannten 50 Jahres Welle liegt, hinwegstreifen kann.

Nachteilig bei der Verwendung von hohen Nabenhöhen von Windenergieanlagen ist, dass zusätzlicher Energieertrag in diesen höheren Höhen, wodurch Mehreinnahmen über eine erhöhte Menge an elektrischer Energie generiert werden können, meist nicht die erhöhten Strukturkosten (z. B: höherer Turm, stabilere Gründung) von Windenergieanlagen, die zur Realisierung von hohen Nabenhöhen notwendig sind, decken können.

Das Dokument EP 2 463 794 A1 offenbart ein Verfahren zur Herstellung eines Entwurfs für einen Satz von Gründungsstrukturen, wobei der Satz von Gründungsstrukturen eine Vielzahl von einzelnen Gründungsstrukturen umfasst, wobei das Verfahren umfasst: Spezifizieren eines oder mehrerer Entwurfskriterien für den Satz von Gründungsstrukturen; Erzeugen einer Vielzahl von Entwürfen für den Satz von Gründungsstrukturen, wobei jeder Entwurf die Entwurfskriterien erfüllt und jeder Entwurf eine Anordnung für jede einzelne Gründung umfasst; Berechnen der Kosten für jeden der Vielzahl von Entwürfen; und Auswählen eines der Vielzahl von Entwürfen auf der Grundlage zumindest der berechneten Kosten. Alternativ berechnet das Verfahren eine Energieabgabe von Energieerzeugungsmitteln, die auf oder innerhalb der Strukturen jedes der mehreren Entwürfe installiert sind, und wählt einen der mehreren Entwürfe auf der Grundlage mindestens der berechneten Energieabgabe aus. Durch die Analyse mehrerer potentieller Entwürfe können die Kosten und/oder der Energie-Output in Abhängigkeit von den Designbeschränkungen optimiert werden.

Das Dokument US 2010/138201 A1 offenbart ein Layout und eine Konfiguration von Windturbinen in einer Windkraftanlage beinhaltend die Identifizierung von Einschränkungen eines Standorts und die Definition mindestens einer Region am Standort für die Platzierung einer Vielzahl von Windturbinen. Der Windzustand in der Region am Standort wird bestimmt. Ein tatsächlicher Windzustand an den verschiedenen möglichen Windturbinenstandorten innerhalb des Standorts wird durch Modellierung des Windzustands mit Nachlaufeffekten an den jeweiligen Windturbinenstandorten bestimmt, wobei die Nachlaufeffekte aus der kumulativen Platzierung anderer Windturbinen an verschiedenen Standorten in der Region resultieren. Die individuelle Windturbinenkonfiguration und der Standort innerhalb der Region wird dann in Abhängigkeit von den tatsächlichen Windbedingungen ausgewählt, die an den einzelnen Standorten der Windturbinen herrschen, um die Leistungsabgabe der einzelnen Windturbinen zu optimieren. Die Auswahl der Turbinenkonfiguration umfasst die Auswahl einer Turbinen-Nabenhöhe, die den Nachlaufverlust der einzelnen Windturbinen in Abhängigkeit von den für den Turbinenstandort vorhergesagten tatsächlichen Windbedingungen minimiert.

### Zusammenfassung einiger beispielhafter Ausführungsformen der Erfindung

Es wäre wünschenswert, dass regelmäßig der Mehrertrag nicht größer ist als die Kosten für den erhöhten Aufwand zur Anordnungsoptimierung und die erhöhten Kosten für unterschiedliche Fertigungsanforderungen, die sich insbesondere aus Nabenhöhenabweichungen ergeben und die größer sind als 1 bis 2 m Nabenhöhenunterschied zur Meeresoberfläche als Bezugsoberfläche.

Gemäß einem ersten beispielhaften Aspekt der Erfindung wird ein Verfahren zur Anordnungsoptimierung einer Vielzahl von Windenergieanlagen offenbart, das folgendes umfasst:

- Erfassen von geospatialen Informationen indikativ für eine oder mehrere Bedingungen über eine Fläche, auf der eine Vielzahl von Windenergieanlagen angeordnet werden sollen, wobei die geospatialen Informationen zumindest eine Windzustandsinformation umfassen, wobei die geospatialen Informationen im Rahmen von einer Bathymetrie ermittelt werden, die natürliche Erhebungen bzw. Absenkungen innerhalb der Fläche repräsentiert;
- Bestimmen von Anordnungspositionsinformationen indikativ für Orte innerhalb der Fläche, an der eine jeweilige Windenergieanlage der Vielzahl von Windenergieanlagen angeordnet werden kann;
- Bestimmen von Wakeverlustinformationen indikativ für Windschatteneffekte durch eine gegenseitige Abschattung der Vielzahl von Windenergieanlagen, wobei die Wakeverlustinformationen zumindest teilweise basierend auf den geospatialen Informationen und den Anordnungspositionsinformationen bestimmt werden;
- Bestimmen von einer Strukturinformation indikativ für ein oder mehrere Strukturelemente für eine Windenergieanlage, wobei ein jeweiliges Strukturelement ein Element von einer Windenergieanlage charakterisiert, wobei die Windenergieanlage zum Einsatz auf der Fläche geeignet ist, wobei die Strukturinformation zumindest teilweise basierend auf den geospatialen Informationen, den Anordnungspositionsinformationen, und den Wakeverlustinformationen bestimmt wird; und
- Ermitteln einer Anordnung der Vielzahl von Windenergieanlagen auf der Fläche, wobei eine Nabenhöhe von einer jeweiligen der Vielzahl von Windenergieanlagen umfassten Windturbine unter Maximierung einer von den jeweiligen Windturbinen der Vielzahl von Windenergieanlagen erzeugten Menge von elektrischer Energie basierend auf der Windzustandsinformation und einer Maximierung von einheitlichen verwendeten Strukturelementen, die von der Vielzahl der Windenergieanlagen umfasst sind, bestimmt wird.

Gemäß einem zweiten Aspekt der Erfindung wird eine Vorrichtung beschrieben, welche dazu eingerichtet ist oder entsprechende Mittel umfasst, ein Verfahren nach dem ersten Aspekt durchzuführen und/oder zu steuern. Vorrichtungen des Verfahrens gemäß dem ersten Aspekt sind oder umfassen insbesondere eine oder mehrere Vorrichtungen gemäß dem zweiten Aspekt.

Gemäß dem zweiten Aspekt der Erfindung wird auch eine alternative Vorrichtung beschrieben, umfassend zumindest einen Prozessor und zumindest einen Speicher mit Computerprogrammcode, wobei der zumindest eine Speicher und der Computerprogrammcode dazu eingerichtet sind, mit dem zumindest einen Prozessor zumindest ein Verfahren gemäß dem ersten Aspekt auszuführen und/oder zu steuern. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfasst eine beispielhafte Vorrichtung ferner Mittel zum Speichern von Informationen wie einen Programmspeicher und/oder einen Arbeitsspeicher. Zum Beispiel umfasst eine beispielhafte erfindungsgemäße Vorrichtung ferner jeweils Mittel zum Empfangen und/oder Senden von Informationen über ein Netzwerk wie eine Netzwerkschnittstelle. Zum Beispiel sind beispielhafte erfindungsgemäße Vorrichtungen über ein oder mehrere Netzwerke miteinander verbunden und/oder verbindbar.

Eine beispielhafte Vorrichtung gemäß dem zweiten Aspekt ist oder umfasst etwa eine Datenverarbeitungsanlage, die softwaremäßig und/oder hardwaremäßig eingerichtet ist, um die jeweiligen Schritte eines beispielhaften Verfahrens gemäß dem zweiten Aspekt ausführen zu können. Beispiele für eine Datenverarbeitungsanlage sind ein Computer, ein Desktop-Computer, ein Server, ein Thinclient und/oder ein tragbarer Computer (Mobilgerät), wie etwa ein Laptop-Computer, ein Tablet-Computer, ein Wearable, ein persönlicher digitaler Assistent oder ein Smartphone.

Einzelne Verfahrensschritte des Verfahrens gemäß dem ersten Aspekt (beispielsweise das Erfassen der geospatialen Informationen) können hierbei mit einer Sensorvorrichtung, welche auch mindestens ein Sensorelement bzw. Sensor(en) aufweist, durchgeführt werden. Ebenso können einzelne Verfahrensschritte (beispielsweise das Bestimmen der Anordnungspositionsinformationen, der Wakeverlustinformationen, der (mindestens einen) Strukturinformation, und/oder das Ermitteln der Anordnung der Vielzahl von Windenergieanlagen), welche beispielsweise nicht unbedingt mit der Sensoreinrichtung durchgeführt werden müssen, von einer weiteren Vorrichtung vorgenommen werden, welche insbesondere über ein Kommunikationssystem mit der Vorrichtung, welche mindestens ein Sensorelement bzw. Sensor(en) aufweist, in Verbindung steht.

Weitere Vorrichtungen können vorgesehen sein, beispielsweise ein Server und/oder beispielsweise ein Teil bzw. eine Komponente einer sogenannten Computer Cloud, welche Datenverarbeitungsressourcen dynamisch für verschiedene Nutzer in einem Kommunikationssystem bereitstellt. Unter einer Computer Cloud wird insbesondere eine Datenverarbeitungs-Infrastruktur gemäß der Definition des "National Institute for Standards and Technology" (NIST) für den englischen Begriff "Cloud Computing" verstanden. Ein Beispiel einer Computer Cloud ist eine Microsoft Windows Azure Platform.

Gemäß dem zweiten Aspekt der Erfindung wird auch ein Computerprogramm beschrieben, das Programmanweisungen umfasst, die einen Prozessor zur Ausführung und/oder Steuerung eines Verfahrens gemäß dem ersten Aspekt veranlassen, wenn das Computerprogramm auf dem Prozessor läuft. Ein beispielhaftes Programm gemäß der Erfindung kann in oder auf einem computerlesbaren Speichermedium gespeichert sein, welches eines oder mehrere Programme enthält.

Gemäß dem zweiten Aspekt der Erfindung wird auch ein computerlesbares Speichermedium beschrieben, welches ein Computerprogramm gemäß dem zweiten Aspekt enthält. Ein computerlesbares Speichermedium kann z.B. als magnetisches, elektrisches, elektro-magnetisches, optisches und/oder andersartiges Speichermedium ausgebildet sein. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nicht-flüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

Gemäß einem dritten Aspekt der Erfindung wird auch ein System beschrieben, umfassend eine oder mehrere Vorrichtungen, welche zusammen ein Verfahren gemäß dem ersten Aspekt durchführen.

Im Folgenden werden beispielhafte Merkmale und beispielhafte Ausgestaltungen nach allen Aspekten detaillierter beschrieben:

Eine oder mehrere Bedingungen der Fläche, auf der die Vielzahl von Windenergieanlagen angeordnet werden soll, sind beispielsweise Erhebungen und/oder Absenkungen der Fläche (auch als Topograhie bezeichnet). Handelt es sich beispielsweise um eine Fläche, auf der ein Offshore-Windpark angeordnet werden soll, entsprechen die Erhebungen und/oder Absenkungen der Fläche beispielsweise denjenigen des Meeresbodens (auch als Bathymetrie bezeichnet).

Die geospatialen Informationen umfassen oder repräsentieren beispielsweise eine Windzustandsinformation, eine Wellenzustandsinformation (z. B. 50 Jahreswelle), eine geotechnische Information (z. B. Bodenzusammensetzung), eine Wassertiefeninformation (z. B. Bathymetrie), eine Metocean-Information (z. B. Welle mit Wind), eine Topographieinformation (z. B. Lokation und Abstand von Turbinen von Windenergieanlagen), oder eine Kombination hiervon, die an (Raum-) Koordinaten der Fläche gebunden sind. Raum-Koordinaten der Fläche sind beispielsweise drei-dimensionale Koordinaten, die von einer Anordnungspositionsinformation repräsentiert sein können. Die Windzustandsinformation ist beispielsweise indikativ für eine Windstärke und optional eine Windrichtung, die regelmäßig an bzw. in dem Bereich der Fläche herrscht. Beispielsweise handelt es sich um eine durchschnittliche Windstärke und optional eine durchschnittliche Windrichtung, die z. B. innerhalb eines (z. B. dem letzten) Monats, Halbjahrs, Jahrs, um nur einige nicht-limitierende Beispiele zu nennen, erfasst (z. B. gemessen) wurde. Die geospatialen Informationen können ferner beispielsweise mit einer Zeit- und/oder Datumsangabe verknüpft sein, so dass die Windzustandsinformation beispielsweise indikativ für einen Wert einer Windstärke ist, die in der Vergangenheit zu der Zeit- und/oder Datumsangabe herrschte.

Die geospatialen Informationen werden beispielsweise erfasst, indem die geospatialen Informationen mittels einer Sensorvorrichtung, die beispielsweise von der Vorrichtung, die das Verfahren nach dem ersten Aspekt der Erfindung ausführt und/oder steuert, umfasst ist oder mit dieser verbindbar ist, gemessen wurden. Eine derartige Sensorvorrichtung umfasst beispielsweise einen oder mehrere Sensoren zum Erfassen (z. B. Messen) einer oder mehrerer Windzustandsinformationen. Beispielsweise wird die Sensorvorrichtung zum Erfassen in der Nähe oder innerhalb der Fläche, an der die Vielzahl von Windenergieanlagen angeordnet werden soll, positioniert. Anschließend kann beispielsweise das Erfassen der geospatialen Information, z. B. umfassend die Windzustandsinformation mittels der Sensorvorrichtung erfolgen.

Die geospatialen Informationen z. B. umfassend zumindest eine geotechnische Information, können beispielsweise im Rahmen von einer sogenannten Bathymetrie ermittelt werden. Im Sinne der vorliegenden Erfindung handelt es sich bei einer derartigen Bathymetrie beispielsweise um eine Messung einer topographischen Gestalt von Gewässerbetten, Meeresböden, und/oder Seegründen. Eine Bathymetrie kann beispielsweise ermittelt werden, indem als Sensorvorrichtung z. B. ein Echolot (z. B. Fächerecholot) und/oder einen Radarsensor (z. B. ein Radarsatellit) eingesetzt wird. Im Rahmen einer derartigen Bathymetrie werden insbesondere eine oder mehrere Tiefenangaben ermittelt. Zum Ermitteln dieser einen oder mehreren Tiefenangaben wird beispielsweise ein (z. B. einheitlicher) Bezugspunkt verwendet, z. B. NN (Normal Null). Die ermittelte Tiefenangabe bzw. die mehreren Tiefenangaben können entsprechend von den geospatialen Informationen repräsentiert oder umfasst oder zumindest ein Teil von diesen sein.

Die Anordnungspositionsinformationen umfassen oder repräsentieren beispielsweise jeweils Koordinatenpaare, z. B. in Form von x- und y- Koordinaten, und/oder Längen- und Breitengradangaben. Die Anordnungspositionsinformationen repräsentieren beispielsweise jeweils Lokationen bzw. Orte, die innerhalb der Fläche liegen und an denen eine Gründung für eine Windenergieanlage der Vielzahl von Windenergieanlagen angeordnet werden kann. Beispielsweise bestimmt sich die Anzahl der Anordnungspositionsinformationen, wobei eine jede dieser Anordnungspositionsinformationen beispielsweise indikativ für genau einen Ort bzw. eine Lokation ist, an der eine Windenergieanlage der Vielzahl von Windenergieanlagen potenziell angeordnet werden kann, durch die Anzahl von Windenergieanlagen, die letztendlich von dem Windpark umfasst sein sollen. Es versteht sich, dass mehr Anordnungspositionsinformationen als die Anzahl von Windenergieanlagen, die letztendlich von dem Windpark umfasst sein sollen, bestimmt werden können. Insbesondere können für jeden Ort bzw. jede Lokation innerhalb der Fläche, an denen jeweils eine Windenergieanlage der Vielzahl von Windenergieanlagen angeordnet werden kann, eine Anordnungspositionsinformation bestimmt werden. Das Bestimmen der Anordnungspositionsinformationen erfolgt beispielsweise zumindest teilweise basierend auf den geospatialen Informationen, die z. B. im Rahmen einer Bathymetrie ermittelt wurden. Das Bestimmen kann beispielsweise ein Berechnen, z. B. durch einen Prozessor, der die geospatialen Informationen verarbeitet, erfolgen.

Windschatteneffekte, die durch die Wakeverlustinformationen repräsentiert sind, können beispielsweise durch eine gegenseitige Abschattung der Vielzahl von Windenergieanlagen bei einer oder mehreren bestimmten Windrichtungen durch ein gegenseitiges aerodynamisches "Abschatten" hervorgerufen werden. Diese werden im Sinne der Erfindung auch als Wakeverluste bezeichnet. Beispielsweise können in Bezug auf eine bestimmte Windrichtung und/oder -stärke, die beispielsweise von der Windzustandsinformation repräsentiert ist, mindestens zwei Windenergieanlagen der Vielzahl von Windenergieanlagen unmittelbar hintereinander liegen, so dass die in Bezug auf die bestimmte Windrichtung hintere Windenergieanlage (wesentlich) weniger Wind ernten kann, als die vordere Windenergieanlage. Dies wird im Sinne der Erfindung unter einem gegenseitigen Abschatten der Windenergieanlagen aufgefasst. Es versteht sich, dass eine derartige Abschattung auch teilweise erfolgen kann, wenn beispielsweise die hintere Windenergieanlage nicht unmittelbar hinter der vorderen Windenergieanlage liegend angeordnet ist, sondern die hintere Windenergieanlage beispielsweise in Bezug auf die durch die Windzustandsinformation repräsentierte Windrichtung nur zum Teil bzw. teilweise von der vorderen Windenergieanlage abgeschattet wird. Es versteht sich ferner, dass derartige Abschattungen auch mehr als eine hinter einer vorderen Windenergieanlage liegende Windenergieanlagen betreffen können.

Das Bestimmen von der Strukturinformation indikativ für ein oder mehrere Strukturelemente für eine Windenergieanlage erfolgt beispielsweise, indem das eine oder die mehreren Strukturelemente aus einer Vielzahl von potentiellen Strukturelementen für die Vielzahl von Windenergieanlagen ausgewählt werden. Ein jeweiliges Strukturelement charakterisiert ein Element, das von jeder der Vielzahl von Windenergieanlagen umfasst sein sollte bzw. muss. Hierzu zählen beispielsweise eine Gründung, mit der die jeweilige Windenergieanlage am Boden (z. B. Meeresboden im Falle einer Offshore-Windenergieanlage) angeordnet (z. B. verankert) ist, ein Turm, der mittels der Gründung gehalten ist und an dessen der Gründung gegenüberliegenden Ende eine Windturbine anordenbar ist, eine Windturbine umfassend einen Generator, sowie ein oder mehrere Rotorblätter, um nur einige nicht-limitierende Beispiele zu nennen.

Anschließend erfolgt beispielsweise das (z. B. iterative) Ermitteln der Anordnung der Vielzahl von Windenergieanlagen auf der Fläche, wobei eine Nabenhöhe von einer jeweiligen der Vielzahl von Windenergieanlagen umfassten Windturbine unter Maximierung einer von den jeweiligen Windturbinen der Vielzahl von Windenergieanlagen erzeugten Menge elektrischer Energie und Maximierung von einem oder mehreren einheitlichen Strukturelementen, die von einer jeweiligen der Vielzahl der Windenergieanlagen umfasst sind, bestimmt wird. Die jeweiligen Windenergieanlagen der Vielzahl von Windenergieanlagen können folglich jeweils unterschiedliche Nabenhöhen aufweisen, die nach den vorstehenden Ausführungen individuell für jede der Vielzahl von Windenergieanlagen ermittelt werden kann.

Das (z. B. iterative) Ermitteln erfolgt beispielsweise derart, dass eine Maximierung von einheitlichen Strukturelementen erfolgt, indem beispielsweise ein Turm (z. B. charakterisiert durch dessen Höhe und Durchmesser) ausgewählt wird. Anschließend erfolgt beispielsweise eine erste Anordnung der Vielzahl von Windenergieanlagen an den von dem einen oder den mehreren Anordnungspositionsinformationen repräsentierten möglichen Orten bzw. Lokationen, an denen jeweils eine Windenergieanlage der Vielzahl von Windenergieanlagen angeordnet werden kann.

Für diese erste Anordnung, bei der die jeweiligen Windenergieanlagen der Vielzahl von Windenergieanlagen beispielsweise verschiedene Nabenhöhen durch Erhebungen und/oder Absenkungen des Meeresbodens (im Falle eines Offshore-Windparks) aufweisen, wird beispielsweise basierend auf der Windzustandsinformation (umfasst von den geospatialen Informationen) für jede der Vielzahl von Windenergieanlagen zumindest eine Wakeverlustinformation bestimmt. Anschließend wird beispielsweise eine Nabenhöhe von zumindest einer der Vielzahl von Windenergieanlagen reduziert oder erhöht, indem beispielsweise angenommen wird, dass der ausgewählte Turm tiefer oder weniger tief im Meeresboden angeordnet (z. B. verankert) wird. Es erfolgt beispielsweise ein erneutes Bestimmen von Wakeverlustinformationen für jede der Vielzahl von Windenergieanlagen. Beispielsweise kann mittels eines Vergleiches des Ergebnisses nach dem ersten Ausführen zu dem zweiten Ausführen ermittelt werden, ob die Menge von elektrischer Energie gegenüber dem ersten Ergebnis verbessert wurde oder nicht.

Anschließend kann eine erneute Veränderung von einer Nabenhöhe erfolgen und ein erneutes Ermitteln nach der vorstehend beschriebenen Art erfolgen.

Alternativ oder zusätzlich kann beispielsweise bei zumindest einer der Vielzahl von Windenergieanlagen eine Veränderung der Gründung, die in einer veränderten Nabenhöhe der jeweiligen Windenergieanlage der Vielzahl von Windenergieanlagen resultiert, vorgenommen werden. Beispielsweise kann durch ein (z. B. iteratives) Durchführen des Ermittelns der Anordnung eine Vielzahl von Varianten von den von dem Windpark umfassten Windenergieanlagen, die zumindest teilweise basierend auf den gemäß der geospatialen Informationen repräsentierten Bedingungen, wie etwa Umgebungsparameter der Fläche oder dergleichen, des Windparks ausgewählt werden, simuliert werden. Entsprechend kann das Ermitteln abschließend unter Berücksichtigung von vordefinierten oder nach vordefinierten Regeln bestimmten Rahmenparametern derart erfolgen, dass die gegenseitigen Wakeverluste (gegenseitige Abschattung(en) der Windenergieanlagen) minimiert sind, bei gleichzeitiger Maximierung der einheitlichen Strukturelemente, die bei der Vielzahl von Windenergieanlagen des Windparks zum Einsatz kommen.

Das Ermitteln einer Anordnung der Vielzahl von Windenergieanlagen auf der Fläche kann beispielsweise zur Ertragsoptimierung von elektrischer Energie ein Variieren (z. B. Verschieben des Ortes bzw. Lokation, an dem eine oder mehrere (alle) der Vielzahl von Windenergieanlagen angeordnet werden sollen) von Abständen der Windturbine, die zwischen den jeweiligen Windenergieanlagen der Vielzahl von Windenergieanlagen bestehen, untereinander umfassen. Dieses Variieren der Abstände kann beispielsweise solange erfolgen, bis sich aus der Minimierung der Wakeverluste (durch ein Bestimmen von entsprechenden Wakeverlustinformationen), die durch eine gegenseitige aerodynamische Abschattung von Windenergieanlagen entstehen, und/oder ein Anordnen der Vielzahl von Windenergieanlagen (z. B. ein geschicktes Platzieren auf besonders stabilen Untergründen (z. B. kein weicher Meeresboden)), das optimierte Ergebnis ergibt.

Das selektierte Erhöhen einzelner Nabenhöhen kann folglich zu erhöhten Energieerträgen führen. Wird gemäß dem Verfahren des ersten Aspekt der Erfindung zudem die Menge an einheitlichen Elementen, die von den jeweiligen Windenergieanlagen der Vielzahl von Windenergieanlagen umfasst sind, maximiert, kann trotz des Erhöhens einzelner Nabenhöhen (und den damit verbundenen erhöhten Fertigungs- und/oder Montagekosten) beispielsweise ein wirtschaftlich sinnvolles, d.h. vorteilhaftes Ergebnis ermittelt werden.

Die ermittelte Anordnung der Vielzahl von Windenergieanlagen auf der Fläche wird beispielsweise von einer Ergebnisinformation repräsentiert. Diese Ergebnisinformation umfasst oder repräsentiert beispielsweise zumindest die gewählten Orte bzw. Lokationen (z. B. durch eine Vielzahl von Anordnungspositionsinformationen), an denen die Vielzahl von Windenergieanlagen angeordnet werden sollen, sowie ferner die jeweiligen Elemente (z. B. durch eine Vielzahl von Strukturinformationen), die eine Windenergieanlage an dem entsprechenden Ort bzw. der Lokation aufweisen muss, wie z. B. Turmhöhe, Turmdurchmesser, und/oder Art der Gründung. Optional kann die Ergebnisinformation beispielsweise ausgegeben werden bzw. deren Ausgabe kann veranlasst werden. Ferner kann beispielsweise basierend auf der Ergebnisinformation ein Plan zur Fertigung und/oder Montage der jeweiligen Windenergieanlagen der Vielzahl von Windenergieanlagen ermittelt (z. B. generiert) werden.

Nach vorstehend angeführter Art kann insbesondere iterativ somit eine optimale Anordnung der Vielzahl von Windenergieanlagen auf der Fläche ermittelt werden.

Dadurch, dass möglichst einheitliche (Struktur-) Elemente von den jeweiligen der Vielzahl von Windenergieanlagen verwendet werden, reduzieren sich beispielsweise die Kosten für die Fertigung und/oder Montage der Vielzahl von Windenergieanlagen gegenüber einer Vielzahl von Windenergieanlagen eines (Offshore-) Windparks, bei dem eine Mehrzahl, insbesondere sämtliche Windenergieanlagen jeweils unterschiedliche (Struktur-) Elemente (z. B. unterschiedliche Turmhöhen und - durchmesser, sowie Gründungen) aufweisen bzw. umfassen.

Die größte mögliche Anzahl an einheitlichen (Struktur-) Elementen von den Windenergieanlagen des Windparks kann im Sinne der Erfindung ferner bedeuten, dass nur der Turm der jeweiligen Windenergieanlage der Vielzahl von Windenergieanlagen einheitlich ist, und an allen oder mehreren Windenergieanlagen jeweils verschiedene Gründungen zur Anordnung des Turms verwendet werden, um nur ein nicht-limitierendes Beispiel zu nennen. Der Optimalfall wäre beispielsweise, dass alle Windenergieanlagen identisch sind, und die zur Minimierung von Wakeverlusten bzw. -effekten notwendigen unterschiedlichen Nabenhöhen der Windenergieanlagen einzig durch optimiertes Platzieren der Windenergieanlagen basierend auf natürlichen Unebenheiten im Meeresboden und/oder einer Berücksichtigung unterschiedlicher Bodensteifigkeiten realisiert ist. Eine Variation wäre beispielsweise ferner eine Fundamentanpassung der Gründung einer jeweiligen Windenergieanlage an die Bodensteifigkeit, z. B. an die Körnung oder Schichtung des Meeresbodens an der Stelle der Verankerung der Gründung.

Zumindest teilweise basierend auf der ermittelten Anordnung der Vielzahl von Windenergieanlagen auf der Fläche kann beispielsweise ein konkreter Bauplan für einen (z. B. Offshore-) Windpark generiert werden, z. B. zumindest teilweise basierend auf der optionalen Ergebnisinformation. Alternativ kann (z. B. direkt) zumindest teilweise basierend auf der ermittelten Anordnung der Vielzahl von Windenergieanlagen auf der Fläche mit dem Bau des (z. B. Offshore-) Windparks begonnen werden. Ferner können beispielsweise basierend auf der ermittelten Anordnung der Vielzahl von Windenergieanlagen auf der Fläche ein oder mehrere Fertigungspläne zur Herstellung der jeweiligen der Vielzahl von Windenergieanlagen bestimmt werden, so dass z. B. eine Herstellung der der jeweiligen der Vielzahl von Windenergieanlagen veranlasst werden kann.

Eine minimale Nabenhöhe von einer jeweiligen Windenergieanlage der Vielzahl von Windenergieanlagen kann beispielsweise durch folgende Gleichung bestimmt sein:

$$\text{Nabenhöhe} = \text{LAT (Lowest Astronomical Tide; auf Deutsch: Seekartennull)} + \text{HSWL50}$$
$$\text{(höchster gemessener Tidewasserspiegel über LAT)} + \text{50-Jahreswellenhöhe} + \text{Freigang} +$$
$$\text{optional: Tiefe der Hauptzugangsplattform} + \text{optional: Höhe des Plattformkrans} +$$
$$\text{optional: Abstand Kranausleger zur Rotorblattspitze} + \text{optional: Sicherheitsreserve} +$$
$$\text{Rotordurchmesser} / 2$$

HSWL 50 repräsentiert den höchsten (gemessenen) Tidewasserspiegel, der in den vergangenen 50 Jahren aufgetreten ist. Er kann beispielsweise ein Absacken der Windenergieanlage über die Lebenszeit (auf Englisch: settlement over life time), z. B. durch einen Bodensetzung, mit berücksichtigen. Die 50 Jahreswellenhöhe repräsentiert die Höhe des höchsten Wellenbergs, der wahrscheinlich (einmal) in 50 Jahren zu erwarten ist. Der Freigang repräsentiert den Raum zwischen Wellenberg und Unterseite der Plattform. Für den Fall, dass ein Plattformkran von einer Windenergieanlage umfasst ist, wird entsprechend der für diesen und optional der für den von dem Plattformkran umfassten Ausleger (z. B. während des Betriebs des Plattformkrans) benötigte Freiraum berücksichtigt. Die Sicherheitsreserve kann zwischen 0.5m und 3m betragen.

Das erfindungsgemäße Verfahren nach dem ersten Aspekt der Erfindung ermöglicht eine Optimierung der Anordnung von einer Vielzahl von Windenergieanlagen unter Berücksichtigung der jeweiligen optimalen Nabenhöhe für eine jede der Vielzahl von Windenergieanlagen. Das Ermitteln der Anordnung kann beispielsweise ferner derart erfolgen, dass eine jeweilige Nabenhöhe der Vielzahl von Windenergieanlagen stets so niedrig wie möglich gewählt wird, insbesondere um die Kosten für Fertigung und/oder Montage gering zu halten.

Im Sinne der Erfindung weisen zwei Windenergieanlagen der Vielzahl von Windenergieanlagen insbesondere ein Delta zwischen zwei Nabenhöhen von etwa 10 bis 50 m, bevorzugt von 15 bis 45 m, 20 bis 40 m, 25 bis 35 m, besonders bevorzugt von 20 m oder 30 m auf.

Gemäß einer beispielhaften Ausführungsform aller Aspekte der Erfindung umfasst das Verfahren ferner:

- Bestimmen einer Normwindinformation indikativ für den Fall, dass sämtliche Windenergieanlagen der Vielzahl von Windenergieanlagen auf der Fläche eine identische Nabenhöhe aufweisen,

wobei die Wakeverlustinformationen ferner zumindest teilweise basierend auf der Normwindinformation bestimmt werden.

Die Normwindinformation kann beispielsweise als Vergleichswert dienen, um bestimmen zu können, welcher Ertrag (z. B. absolut oder prozentual) durch ein Anordnen der jeweiligen Windturbinen in unterschiedlichen Höhe von deren Naben erzielt werden kann, im Vergleich zu einer Anordnung der Windturbinen, deren Naben alle in der identischen Höhe angeordnet werden.

Gemäß einer beispielhaften Ausführungsform aller Aspekte der Erfindung erfolgt das Ermitteln der Anordnung von der Vielzahl von Windenergieanlagen auf der Fläche ferner unter Minimierung einer gegenseitigen Beeinflussung der Windenergieanlagen.

Wie bereits vorstehend ausgeführt, kann die Anordnung von der Vielzahl von Windenergieanlagen auf der Fläche unter Minimierung einer gegenseitigen Beeinflussung der Windenergieanlagen erfolgen. Beispielsweise kann eine Optimierung in drei Dimensionen (3D) durchgeführt werden, insbesondere mit dem Ziel der Verwendung von möglichst vielen (im optimalen Fall: vollständig) einheitlichen Strukturelementen (z. B. Turm- bzw. Pfahldurchmesser, Turm- bzw. Pfahllänge, Gründung, um nur einige nicht-limitierende Beispiele zu nennen) der jeweiligen von dem Windpark umfassten Windenergieanlagen. Derart ist es möglich, Serieneffekte bei der Fertigung und auch der Montage der (Struktur-) Elemente der jeweiligen Windenergieanlagen des Windparks zu erzielen.

Gemäß einer beispielhaften Ausführungsform aller Aspekte der Erfindung erfolgt das Ermitteln der Anordnung von der Vielzahl von Windenergieanlagen auf der Fläche ferner unter Minimierung der absoluten Nabenhöhe der jeweiligen Windenergieanlage der Vielzahl von Windenergieanlagen.

Generell kann das Ermitteln der Anordnung unter der Rahmenbedingung erfolgen, dass je höher eine Nabe von einer Windenergieanlage angeordnet wird, desto höher die Kosten für diese Windenergieanlagen sind. Die Kosten steigen insbesondere exponentiell mit höheren Nabenhöhen. Entsprechend wird erfindungsgemäß, insbesondere zur Minimierung der initialen Kosten für die Fertigung und Montage der jeweiligen Windenergieanlagen, das Ermitteln der Anordnung unter der Minimierung der (absoluten) jeweiligen Nabenhöhen der Windenergieanlagen, die von dem Windpark umfasst sein sollen, erfolgen.

Gemäß einer beispielhaften Ausführungsform aller Aspekte der Erfindung erfolgt das Ermitteln der Anordnung von der Vielzahl von Windenergieanlagen auf der Fläche ferner unter Maximierung von einem oder mehreren identischen Strukturelementen der jeweiligen Windenergieanlage der Vielzahl von Windenergieanlagen auf der Fläche.

Generell kann das Ermitteln der Anordnung unter der Rahmenbedingung erfolgen, dass je mehr einheitliche (Struktur-) Elemente, die von den jeweiligen Windenergieanlagen der Vielzahl von Windenergieanlagen des Windparks umfasst sind, je niedriger die Kosten für diese Windenergieanlagen sind. Entsprechend kann beispielsweise, insbesondere zur Minimierung der initialen Kosten für die Fertigung und Montage der jeweiligen Windenergieanlagen, das Ermitteln der Anordnung unter der Maximierung der einheitlichen (Struktur-) Elemente der jeweiligen Windenergieanlagen des Windparks erfolgen.

Gemäß einer beispielhaften Ausführungsform aller Aspekte der Erfindung sind das eine oder die mehreren identischen Strukturelemente der jeweiligen Windenergieanlage der Vielzahl von Windenergieanlagen primär ein identischer Turm und/oder ein identisches Fundament der jeweiligen der Vielzahl von Windenergieanlagen.

In der Regel ist ein Turm einer Windenergieanlage billiger als ein Fundament, insbesondere Im Hinblick auf Fertigung und Material. Eine Reduzierung der Kosten wird folglich durch möglichst identische (und optional) lange Türme ermöglicht. Identische Fundamente ermöglichen das Verwenden von identischen Gründungen der Vielzahl von Windenergieanlagen.

Unter einem identischen Turm im Sinne der Erfindung wird insbesondere die Länge bzw. Höhe des Turm, und/oder der Durchmesser des Turms, der von einer jeweiligen Windenergieanlage der Vielzahl von Windenergieanlagen umfasst ist, verstanden.

Zur Realisierung an mitunter zu erreichende verschiedene (absolute) Nabenhöhen der jeweiligen Windenergieanlagen kann beispielsweise ein Turm gleicher Länge tiefer oder weniger tief verankert werden (z. B. im Meeresboden).

Um die erforderliche Steifigkeit bei Windenergieanlagen mit hoher Nabenhöhe zu erreichen, kann beispielsweise alternativ oder zusätzlich der jeweilige Turm oder das dazugehörige Fundament von innen versteift werden, z. B. mittels eines Befüllens mit Beton oder dergleichen, um nur ein nicht-limitierendes Beispiel zu nennen.

Gemäß einer beispielhaften Ausführungsform aller Aspekte der Erfindung ist das eine oder die mehreren identischen Strukturelemente der jeweiligen Windenergieanlagen der Vielzahl von Windenergieanlagen sekundär eine identische Gründung der jeweiligen der Vielzahl von Windenergieanlagen.

Unter einer identischen Gründung im Sinne der Erfindung wird insbesondere eine Gründung verstanden, die möglichst viele der auftretenden Anwendungsfälle des Windparks abdeckt. Beispielsweise weisen die jeweiligen Gründungen einen Einspannpunkt auf zur Aufnahme des Turms einer jeweiligen Windenergieanlage. Ferner weisen die jeweiligen Gründungen beispielsweise jeweils einen Verankerungsabschnitt auf zur Verankerung, z. B. im Meeresboden.

Bei der identischen Gründung kann es sich beispielsweise um eine sogenannte Monopile-Gründung oder alternativ oder zusätzlich um eine Jacket-Gründung handeln.

Gemäß einer beispielhaften Ausführungsform aller Aspekte der Erfindung ist zumindest eine Windenergieanlage der Vielzahl von Windenergieanlagen eine Windenergieanlage ohne außenliegende Arbeitsplattform.

Gemäß einer beispielhaften Ausführungsform aller Aspekte der Erfindung ist zumindest eine Windenergieanlage der Vielzahl von Windenergieanlagen eine Windenergieanlage mit einer Monopile-Gründung, wobei die Monopile-Gründung eine Manschette umfasst, wobei die Manschette die Monopile-Gründung umschließt und ferner zumindest teilweise in den Meeresboden eingelassen ist. Dies wird im Sinne des Gegenstands auch als Collared Monopile bezeichnet.

Ferner kann beispielsweise eine Monopile-Gründung mittels einer den Turm einer jeweiligen Windenergieanlage umgebenden Manschette variiert werden. Eine derartige Manschette hat beispielsweise einen Durchmesser, der größer ist als der des Monopiles der jeweiligen Windenergieanlage. Die Manschette befindet sich nach der Montage insbesondere unmittelbar auf dem Meeresboden aufliegend, so dass die Steifigkeit der jeweiligen Windenergieanlage erhöht wird.

Dies ermöglicht es insbesondere, beispielsweise als identische Gründung der Windenergieanlagen jeweils eine Monopile-Gründung einzusetzen. Um eine jeweilige der Vielzahl von Windenergieanlagen an mitunter erforderliche Umgebungsparameter (z. B. des Meeresbodens) anzupassen, können beispielsweise, soweit erforderlich, eine oder mehrere der Vielzahl von Windenergieanlagen mit einer Gründung umfassend eine Manschette versehen werden.

Die jeweiligen Gründungen der Vielzahl von Windenergieanlagen sind somit identisch, und um die Erfordernisse der jeweiligen Windenergieanlagen beispielsweise an die Lokationen bzw. Aufstellungsorte der Windenergieanlagen anzupassen, kann entsprechend eine derartige Manschette bedarfsgerecht eingesetzt werden.

Gemäß einer beispielhaften Ausführungsform aller Aspekte der Erfindung ist zumindest eine Windenergieanlage der Vielzahl von Windenergieanlagen eine Windenergieanlage mit einer Jacket-Gründung.

Eine Jacket-Gründung kann beispielsweise bei (nahezu) identischer Struktur unterschiedliche Nabenhöhen realisieren, wenn beispielsweise eine Nutzung von natürlichen Erhebungen bzw. Absenkungen, z. B. des Meeresbodens nicht möglich sein sollte. Dies kann beispielsweise ermöglicht werden, indem Jacket-Gründungen der jeweiligen der Vielzahl von Windenergieanlagen durch eine Variation der sogenannten Stick-Up Höhe der jeweiligen Jacket-Gründung an die Gegebenheiten der Lokationen bzw. den intendierten Aufstellungsorten anzupassen.

Es können z. B. unterschiedliche Stick-Up Höhen der Jacket-Gründung (im Boden) berücksichtigt werden.

Dann wären alle Jackett-Gründungen einheitlich, jedoch würden beispielsweise unterschiedliche Pfahlhöhen bzw. Turmlängen erforderlich sein, um verschiedene Nabenhöhen der jeweiligen Windenergieanlagen des Windparks realisieren zu können.

Werden beispielsweise sämtliche (Struktur-) Elemente der Vielzahl von Windenergieanlagen einheitlich gestaltet, sind diese somit in ihrer Gesamtsteifigkeit einheitlich.

Gemäß einer beispielhaften Ausführungsform aller Aspekte der Erfindung weist ein jeweiliger Turm der Vielzahl von Windenergieanlagen im Wesentlichen einen identischen Durchmesser auf.

Gemäß einer beispielhaften Ausführungsform aller Aspekte der Erfindung weist zumindest eine Windenergieanlage der Vielzahl von Windenergieanlagen einen Kolkschutz auf.

Der Einsatz von Kolkschutz erfolgt beispielsweise in Abhängigkeit der Bodenbeschaffenheit (z. B. Granularität).

An einigen Standorten kann dementsprechend Kolkschutz eingesetzt werden, an anderen hingegen nicht. Kolkschutz wirkt der Gefahr, dass das Loch, in dem ein Verankerungsabschnitt eines Turms eingeführt ist, sich ausweitet, entgegen. Dies kann beispielsweise durch die Bodenbeschaffenheit verursacht sein, wie z. B. die Granularität (Kornfeinheit) des Bodens (z. B. Sieblinienverteilung gibt Aufschluss hierüber (z. B. 0,002 cm bis etwa 20 cm)). Kolkschutz wirkt dann einem Lösen des Verankerungsabschnitts aus dem (Meeres-) Boden hinaus entgegen.

Wenn sich Kolk ausbildet, dann bildet sich ein Loch bzw. das Loch um den Verankerungsabschnitt vergrößert sich, wodurch die Steifigkeit der Gründung verringert wird. Wenn sich beispielsweise anhand der Sieblinienverteilung herausstellt, dass der Boden des Windenergieparks im Wesentlichen gleiche oder sogar identische Granularität aufweist, kann der Windpark beispielsweise dahingehend optimiert werden, dass Kolkschutz nur an Gründungen von Windenergieanlagen mit höherer Nabenhöhe eingesetzt wird.

Gemäß einer beispielhaften Ausführungsform aller Aspekte der Erfindung kann ferner eine Berücksichtigung von Helikopterkorridoren (auch als Airspace bezeichnet) erfolgen. Z. B. werden die Turbinen nah am Helikopterkorridor eher niedrig gewählt und die höheren Nabenhöhen an den Stellen verwendet, die nicht in Berührung oder innerhalb des Helikopterkorridors liegen.

Gemäß einer beispielhaften Ausführungsform aller Aspekte der Erfindung können ferner beispielsweise bei der Höhenstaffelung Durchflugkorridore für Vögel vorgesehen sein, so dass diese beispielsweise ohne Kollateralschaden unter den Rotorblättern durchfliegen können.

Das Ermitteln der Anordnung kann insbesondere gemäß einer oder mehreren der im folgenden aufgeführten Bedingungen erfolgen, um Wakeverluste zu minimieren und die Menge erzeugter elektrische Energie durch die jeweiligen von dem Windpark umfassten Windenergieanlagen zu maximieren:

- An Lokationen größerer Wassertiefe wird die Nabenhöhe gesenkt, z. B. durch Weglassen der Arbeitsplattform oder verwenden kleinerer Rotoren (mit innenliegenden Zugang);
- An Lokationen geringerer Wassertiefe wird die Nabenhöhe erhöht;
- An Lokationen erhöhter Nabenhöhe wird der Einspannpunkt der Struktur in Bodennähe z. B. durch Verwenden von Manschettenkonstruktionen (sogenannte Collared Monopile, Laminated Monopile) weiter in Richtung der Nabe verschoben;
- Der Pfahl wird von innen ausgesteift, z. B. durch Verfüllen mit Grout, Sand und/oder Beton;
- eine Kolkschutzschüttung erhöhter Mächtigkeit wird verwendet, die ggf. zusätzlich durch Unterwasserbeton in Pfahlnähe versteift wird;
- An Lokationen mit erhöhter Bodensteifigkeit wird bevorzugt eine höhere Nabenhöhe verwendet; und
- An Lokationen geringerer Bodensteifigkeit wird bevorzugt eine niedrigere Nabenhöhe der Windenergieanlage eingesetzt.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Aspekten offenbart verstanden werden.

Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

## Kurze Beschreibung der Figuren

Es zeigen:

Fig. 1 eine schematische Darstellung einer beispielhaften Ausführungsform eines Systems gemäß der vorliegenden Erfindung;

Fig. 2 ein Flussdiagramm einer beispielhaften Ausführungsform eines Verfahrens gemäß der vorliegenden Erfindung;

Fig. 3 eine schematische Darstellung einer Ausführungsform einer Vorrichtung gemäß der vorliegenden Erfindung; und

Fig. 4 ein Beispiel eines Ergebnisses einer erfolgten Anordnungsoptimierung für eine Vielzahl von Windenergieanlagen, das beispielsweise mittels einer beispielhaften Ausführungsform eines Verfahrens gemäß der vorliegenden Erfindung ermittelt wurde.

## Detaillierte Beschreibung einiger beispielhafter Ausführungsformen der Erfindung

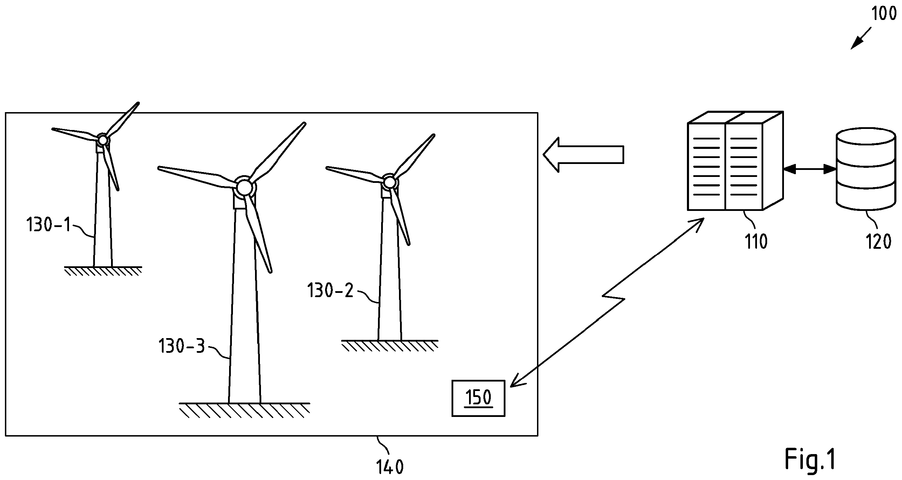

Fig. 1 ist eine schematische Darstellung einer beispielhaften Ausführungsform eines Systems 100 gemäß der vorliegenden Erfindung. Das System 100 umfasst eine Vorrichtung 110 (z. B. ein Server), eine optionale Datenbank 120, die mit der Vorrichtung 110 operativ verbunden ist oder von dieser umfasst ist, eine Vielzahl von Windenergieanlagen, vorliegend drei Windenergieanlagen 130-1 bis 130-3, und eine Vorrichtung 150 (z. B. eine Messeinrichtung oder Sensorvorrichtung).

Die drei Windenergieanlagen 130-1 bis 130-3, und die Vorrichtung 150 sind innerhalb der Fläche 140 angeordnet. Die Fläche 140 repräsentiert in Fig. 1 schematisch einen Bereich, innerhalb dessen eine Anordnung der Windenergieanlagen 130-1 bis 130-3 erfolgen soll, wobei nach der Anordnung der Windenergieanlagen 130-1 bis 130-3 innerhalb der Fläche 140 die von den Windenergieanlagen 130-1 bis 130-3 erzeugte Menge elektrischer Energie maximiert sein soll. Die Fläche 140 ist beispielsweise ein Offshore-Bereich (z. B. ein Meeresboden), auf dem ein Offshore-Windpark errichtet werden soll.

Die Vorrichtung 150 umfasst beispielsweise einen oder mehrere Sensoren, z. B. einen Windsensor, einen Echolotsensor, und/oder einen Radarsensor, so dass mittels der Vorrichtung 150 beispielsweise geospatiale Informationen erfasst (z. B. gemessen) bzw. ermittelt werden können. Mittels der Vorrichtung 150 bzw. dem einen oder den mehreren von der Vorrichtung 150 umfassten Sensoren kann beispielsweise eine Bathymetrie ermittelt werden, die beispielsweise (natürliche) Erhebungen bzw. Absenkungen innerhalb des Fläche 140 repräsentiert, so dass anschließend beispielsweise eine entsprechende geospatiale Informationen dies repräsentieren bzw. entsprechende die Erhebungen bzw. Absenkungen innerhalb des Fläche 140 wiedergebende Informationen dies umfassen kann bzw. können.

Der breite Pfeil, der von der Vorrichtung 110 auf die Fläche 140 zeigt, soll in Fig. 1 schematisch andeuten, dass beispielsweise mittels der Vorrichtung 110 nach der Ausführung und/oder Steuerung einer beispielhaften Ausführungsform eines erfindungsgemäßen Verfahrens eine (optimierte) Anordnung für die Vielzahl von Windenergieanlagen, beispielsweise die Windenergieanlagen 130-1 bis 130-3 innerhalb der Fläche ermittelt ist.

Ausführungsbeispiele nach allen Aspekten der Erfindung ermöglichen es beispielsweise natürliche (z. B. geotechnische) Einflüsse der intendierten Fläche (z. B. Fläche 140) zu nutzen, um eine optimierte Anordnung von Windenergieanlagen gemäß der vorliegenden Erfindung erzielen zu können. Das Ermitteln der Anordnung der Vielzahl von Windenergieanlagen (z. B. die Windenergieanlagen 130-1 bis 130-3) erfolgt beispielsweise nach den im Folgenden aufgeführten Richtlinien:
An Lokationen innerhalb der Fläche größerer Wassertiefe wird eine niedrigere Nabenhöhe in Bezug auf NN (alternativ: Meeresspiegel) verwendet bzw. gewählt. Hierzu kann beispielsweise eine mitunter von derartigen Windenergieanlagen umfasste und in Bezug auf den Turm außenliegende Arbeitsplattform weggelassen werden, um auch an Absenkungen innerhalb der Fläche (z. B. Fläche 140) eine Windenergieanlage mit einer niedrigen Nabenhöhe anordnen zu können, um nur ein nicht-limitierendes Beispiel zu nennen.

Zudem ist die im Folgenden aufgeführte Richtlinie beispielsweise ebenfalls berücksichtigt im Rahmen des Ermittelns der Anordnung der Vielzahl von Windenergieanlagen innerhalb der Fläche:
An Lokationen innerhalb der Fläche mit geringer(er) Wassertiefe wird im Gegensatz hierzu eine höhere Nabenhöhe in Bezug auf NN (alternativ: Meeresspiegel) erreicht bei identischen (alternativ: ähnlicher, falls geringfügige Änderungen an den Strukturen aufgrund z. B. geotechnischer Erfordernisse vorgenommen werden müssen) von den jeweiligen Windenergieanlagen umfassten (Struktur-) Elementen.

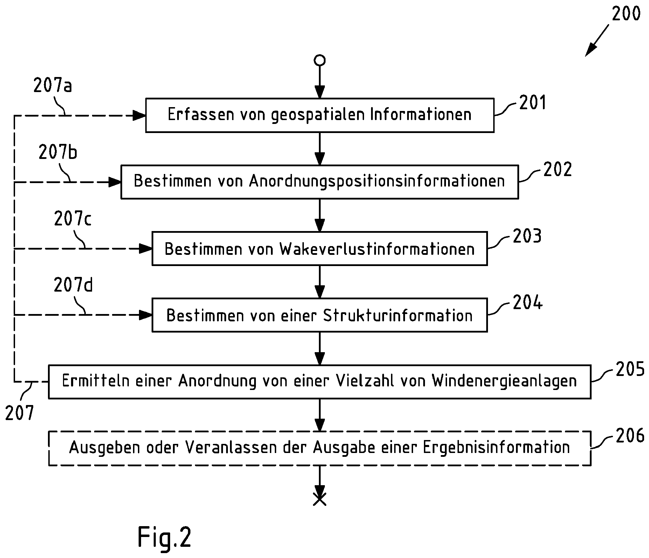

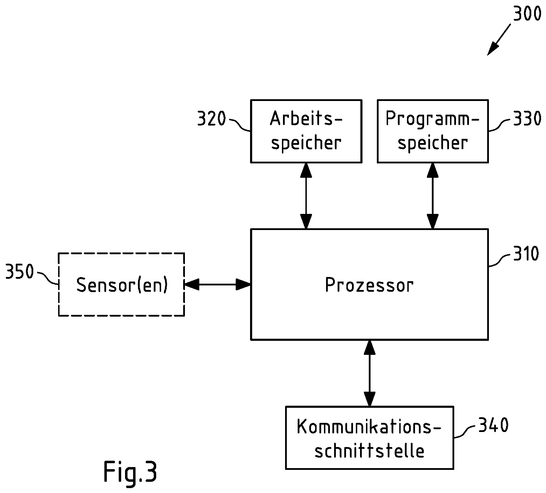

Fig. 2 stellt ein Flussdiagramm 200 einer beispielhaften Ausführungsform eines Verfahrens dar, das im Kontext der vorliegenden Erfindung ausgeführt werden kann. Das Verfahren wird beispielsweise von der Vorrichtung 110 und/oder 150 nach Fig. 1 ausgeführt und/oder gesteuert, wobei die Vorrichtung 110 und/oder die Vorrichtung 150 nach Fig. 1 beispielsweise jeweils als Vorrichtung 300 nach Fig. 3 ausgebildet sein können.

In einem ersten Schritt 201 erfolgt ein Erfassen von geospatialen Informationen. Das Erfassen erfolgt beispielsweise, indem die Vorrichtung 110 die geospatialen Informationen empfängt, z. B. von der Vorrichtung 150. Ferner können die geospatialen Informationen beispielsweise von der Vorrichtung 150 erfasst werden, indem ein Sensor der von der Vorrichtung 150 umfasst oder mit dieser verbunden ist, die geospatialen Informationen ermittelt, z. B. auf Basis von gemessenen Werten (z. B. mittels eines Windsensors, Echolotsensors, und/oder Radarsensors, um nur einige nicht-limitierende Beispiele zu nennen). Nach dem Erfassen der geospatialen Informationen seitens der Vorrichtung 150 können diese optional an die Vorrichtung 110 gesendet werden für den Fall, dass beispielsweise die weiteren Verfahrensschritte 202 bis 205 und optional der Schritt 206 nicht bzw. nicht alle von der Vorrichtung 150 ausgeführt und/oder gesteuert werden, sondern zumindest ein Teil der Schritte 202 bis 205 und optional der Schritt 206 von der Vorrichtung 110 ausgeführt und/oder gesteuert werden.

In einem zweiten Schritt 202 erfolgt ein Bestimmen (z. B. Berechnen) von Anordnungspositionsinformationen zumindest teilweise basierend auf den in dem Schritt 201 erfassten geospatialen Informationen. Das Bestimmen kann von der Vorrichtung 110 oder der Vorrichtung 150, oder von beiden Vorrichtungen 110 und 150 gemeinsam ausgeführt und/oder gesteuert werden.

In einem dritten Schritt 203 erfolgt ein Bestimmen (z. B. Berechnen) von Wakeverlustinformationen zumindest teilweise basierend auf den in den Schritten 201 und 202 erfassten geospatialen Informationen und den Anordnungsinformationen. Das Bestimmen kann von der Vorrichtung 110 oder der Vorrichtung 150, oder von beiden Vorrichtungen 110 und 150 gemeinsam ausgeführt und/oder gesteuert werden.

In einem vierten Schritt 204 erfolgt ein Bestimmen (z. B. Berechnen) von (zumindest) einer Strukturinformation zumindest teilweise basierend auf den in den Schritten 201, 202, sowie 203 erfassten geospatialen Informationen, den Anordnungsinformationen, sowie den Wakeverlustinformationen. Das Bestimmen kann von der Vorrichtung 110 oder der Vorrichtung 150, oder von beiden Vorrichtungen 110 und 150 gemeinsam ausgeführt und/oder gesteuert werden.

In einem fünften Schritt 205 erfolgt ein Ermitteln (z. B. Berechnen) einer Anordnung von einer Vielzahl von Windenergieanlagen. Das Ermitteln kann von der Vorrichtung 110 oder der Vorrichtung 150, oder von beiden Vorrichtungen 110 und 150 gemeinsam ausgeführt und/oder gesteuert werden.

In einem optionalen sechsten Schritt 206 erfolgt ein Ausgeben oder ein Veranlassen des Ausgebens einer Ergebnisinformation. Die Ergebnisinformation wird beispielsweise an eine weitere Vorrichtung des Systems 100 nach Fig. 1 (in Fig. 1 nicht dargestellt) ausgegeben, die beispielsweise zumindest teilweise basierend auf der Ergebnisinformation einen oder mehrere Pläne zur Fertigung und/oder Montage von den jeweiligen der Vielzahl von Windenergieanlagen des Windparks ermittelt bzw. generiert. Es versteht sich, dass vor der Ausgabe bzw. das Veranlassen der Ausgabe der Ergebnisinformation diese beispielsweise basierend auf der ermittelten Anordnung der Vielzahl von Windenergieanlagen einer Fläche (z. B. Fläche 140 nach Fig. 1) erstellt bzw. generiert wird, so dass die Ergebnisinformation ein Ergebnis der in dem Schritt 205 ermittelten Anordnung repräsentiert oder umfasst.

Die Schritte 201, 202, 203, und/oder 204 können jeweils mehrmals Durchlaufen werden, um eine iterative Ausführung und/oder Steuerung des Verfahrens gemäß der vorliegenden Erfindung zu realisieren. Dies ist schematisch in dem Flussdiagramm 200 über den auf die Schritte 201, 202, 203 bzw. 204 zurückgeführten und gestrichelt dargestellten Pfeil 207 dargestellt.

Beispielsweise können nach der Ausführung und/oder Steuerung des Schrittes 205 die Schritte 201, 202, 203 und 204 einmal oder mehrmals erneut ausgeführt und/oder gesteuert werden. Dies ist über den gestrichelten Pfeil 207a in dem Flussdiagramm 200 dargestellt.

Alternativ oder zusätzlich können beispielsweise nach der Ausführung und/oder Steuerung des Schrittes 205 die Schritte 202, 203 und 204 einmal oder mehrmals erneut ausgeführt und/oder gesteuert werden. Dies ist über den gestrichelten Pfeil 207b in dem Flussdiagramm 200 dargestellt.

Alternativ oder zusätzlich können beispielsweise nach der Ausführung und/oder Steuerung des Schrittes 205 die Schritte 203 und 204 einmal oder mehrmals erneut ausgeführt und/oder gesteuert werden. Dies ist über den gestrichelten Pfeil 207c in dem Flussdiagramm 200 dargestellt.

Alternativ oder zusätzlich kann beispielsweise nach der Ausführung und/oder Steuerung des Schrittes 205 der Schritt 204 einmal oder mehrmals erneut ausgeführt und/oder gesteuert werden. Dies ist über den gestrichelten Pfeil 207d in dem Flussdiagramm 200 dargestellt.

Es versteht sich, dass beispielsweise auch nach der Ausführung und/oder Steuerung des Schrittes 205 eine beliebige Kombination der Schritte 201, 202, 203, sowie 204 einmal oder mehrmals erneut ausgeführt und/oder gesteuert werden können, z. B. die Schritt 201, 203 und 204, oder die Schritte 201 und 204, um nur einige nicht-limitierende Beispiele zu nennen.

Fig. 3 zeigt eine schematische Darstellung einer beispielhaften Ausführungsform einer Vorrichtung 300, die im Kontext der vorliegenden Erfindung eingesetzt werden kann.

Die Vorrichtung 300 kann beispielsweise die Vorrichtung 110 nach Fig. 1 repräsentieren, und dann beispielsweise das Verfahren des Flussdiagramms 200 der Fig. 2 ausführen. Die Vorrichtung 300 kann beispielsweise die Vorrichtung 150 nach Fig. 1 repräsentieren, und dann beispielsweise das Verfahren des Flussdiagramms 200 der Fig. 2 ausführen.

Für den Fall, dass sowohl die Vorrichtung 150 nach Fig. 1 und die Vorrichtung 110 nach Fig. 1 jeweils eine Vorrichtung gemäß Vorrichtung 300 der Fig. 3 repräsentieren, können diese zusammen von einer beispielhaften Ausführungsform eines Systems 100 der Fig. 1 umfasst sein, und dann beispielsweise das Verfahren des Flussdiagramms 200 der Fig. 2 zusammen ausführen.

Die Vorrichtung 300 kann ferner beispielsweise von einer jeweiligen Windenergieanlage, z. B. eine der Windenergieanlagen 130-1 bis 130-3 nach Fig. 1, umfasst sein, und dann beispielsweise das Verfahren des Flussdiagramms 200 der Fig. 2 ausführen.

Vorrichtung 300 umfasst einen Prozessor 310 mit zugeordnetem Arbeitsspeicher 320 und Programmspeicher 330. Der Prozessor 310 führt beispielsweise Programmanweisungen aus, die im Programmspeicher 330 gespeichert sind. Die Programmanweisungen führen das Verfahren gemäß dem ersten Aspekt der Erfindung aus und/oder steuern dieses. Damit enthält der Programmspeicher 330 ein Computerprogramm nach einem beispielhaften Aspekt der Erfindung und stellt ein Computerprogrammprodukt zu dessen Speicherung dar. Vorrichtung 300 stellt ein Beispiel einer Vorrichtung gemäß dem zweiten Aspekt der Erfindung dar.

Der Programmspeicher 330 kann beispielsweise ein persistenter Speicher, wie beispielsweise ein Read-Only-Memory (ROM)-Speicher sein. Der Programmspeicher kann beispielsweise fest mit dem Prozessor 310 verbunden sein, kann aber alternativ auch lösbar mit dem Prozessor 310 verbunden sein, beispielsweise als Speicherkarte, Diskette oder optisches Datenträgermedium (z. B. eine CD, DVD, oder Blu-Ray). In dem Programmspeicher 330, oder in einem separaten Speicher, können auch weitere Informationen abgespeichert sein.

Der Arbeitsspeicher 320 wird beispielsweise zur Speicherung temporärer Ergebnisse während der Abarbeitung der Programmanweisungen genutzt. Es handelt sich hierbei beispielsweise um einen flüchtigen Speicher, wie beispielsweise einen Random-Access-Memory (RAM)-Speicher.

Der Prozessor 310 ist ferner beispielsweise mit einer Kommunikationsschnittstelle 340 verbunden, mit der beispielsweise ein Informationsaustausch mit anderen Vorrichtungen möglich ist (siehe die Pfeile in Fig. 1).

Die Vorrichtung 300 kann auch weitere Komponenten enthalten. Falls Vorrichtung 300 die Vorrichtung 110 und/oder 150 nach Fig. 1 repräsentiert, ist beispielsweise ein Erfassungsmittel zum Erfassen von geospatialen Informationen vorhanden. Das Erfassungsmittel ist beispielsweise zum Erfassen von Informationen von einem Windsensor, einem Echolotsensor, einem Radarsensor, um nur einige nicht-limitierende Beispiele zu nennen, eingerichtet, so dass mit denen das Erfassen von geospatialen Informationen ermöglicht ist. Ferner sind diese beispielsweise mit dem Prozessor 310 operativ verbunden. Der Windsensor, der Echolotsensor, und/oder der Radarsensor können beispielsweise als Sensor(en) 350 gemäß Fig. 3 angesehen werden.

Falls Vorrichtung 300 die Vorrichtung 110 und/oder 150 nach Fig. 1 repräsentiert, ist beispielsweise ferner ein Bestimmungsmittel zum Bestimmen von Anordnungspositionsinformationen, von Wakeverlustinformationen, von(zumindest) einer Strukturinformation, und/oder von einer Ergebnisinformation, um nur einige nicht-limitierende Beispiele zu nennen vorhanden, wobei das Bestimmungsmittel beispielsweise als strukturelle und/oder funktionelle Einheit eingerichtet ist und beispielsweise von dem Prozessor 310 umfasst ist oder mit diesem operativ verbunden ist.

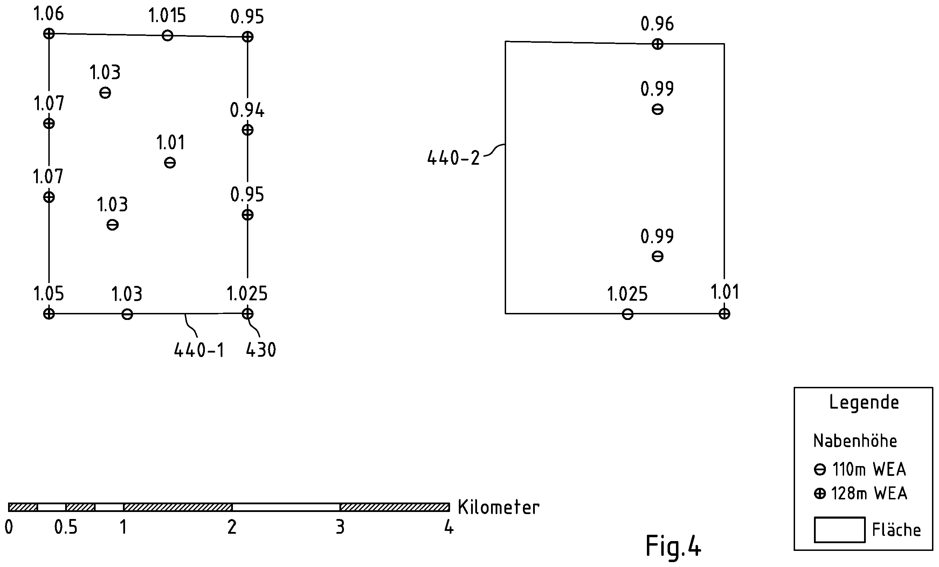

Fig. 4 zeigt ein Beispiel eines Ergebnisses einer erfolgten Anordnungsoptimierung für eine Vielzahl von Windenergieanlagen, das beispielsweise mittels einer beispielhaften Ausführungsform eines Verfahrens gemäß der vorliegenden Erfindung ermittelt wurde.

Die über die geschlossene Linie jeweils gezeigten Bereiche der Fig. 4 kennzeichnen jeweils eine Fläche 440-1 und 440-2, innerhalb derer eine Anordnung der Vielzahl von Windenergieanlagen 430 erfolgen soll.

Die Windenergieanlagen 430 sind in Fig. 4 schematisch mittels eines Kreises dargestellt, wobei die jeweiligen Kreise jeweils entweder mit einem "+"-Zeichen oder einem "-"-Zeichen versehen sind. Punkte, die mit einem "+"-Zeichen versehen sind, stellen schematisch Windenergieanlagen mit einer höheren Nabenhöhe gegenüber denjenigen Punkten, die mit einem "-"-Zeichen versehen sind, dar. Gemäß der in der Fig. 4 angeführten Legende weisen die Windenergieanlagen, die schematisch über einen mit einem "+"-Zeichen versehenen Punkt eine Nabenhöhe von 128 m über NN auf. Die Windenergieanlagen, die schematisch über einen mit einem "-"-Zeichen versehenen Punkt dargestellt sind, weisen eine Nabenhöhe von 110 m über NN auf.

Zudem ist oberhalb von jedem Punkt, der schematisch jeweils eine Windenergieanlage des Windparks darstellt, eine Zahl dargestellt, die zwischen null und zwei liegt. Diese Zahl kennzeichnet den prozentualen Mehrertrag der jeweiligen Windenergieanlage gegenüber dem Mittelwert aller von dem Windpark gemäß der Fig. 4 dargestellten Vielzahl von Windenergieanlagen. Der Mittelwert ist z. B. als Referenzwert über die Zahl "1" definiert. Beispielsweise weist die Windenergieanlage der Fig. 4, die mit dem Bezugszeichen 430 versehen ist, einen um 2,5 % erhöhten Mehrertrag gegenüber dem Mittelwert aller von dem Windpark umfassten Windenergieanlagen auf. Dies wird durch die Zahl "1,025" repräsentiert.

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1.    Verfahren zur Anordnungsoptimierung einer Vielzahl von Windenergieanlagen (130-1, 130-2, 130-3), umfassend:

- Erfassen von geospatialen Informationen indikativ für eine oder mehrere Bedingungen einer Fläche (140), auf der eine Vielzahl von Windenergieanlagen (130-1, 130-2, 130-3) angeordnet werden sollen, wobei die geospatialen Informationen zumindest eine Windzustandsinformation umfassen, wobei die geospatialen Informationen im Rahmen von einer Bathymetrie ermittelt werden, die natürliche Erhebungen bzw. Absenkungen innerhalb der Fläche (140) repräsentiert;
- Bestimmen von Anordnungspositionsinformationen indikativ für Orte innerhalb der Fläche (140), an der eine jeweilige Windenergieanlage (130-1, 130-2, 130-3) der Vielzahl von Windenergieanlagen (130-1, 130-2, 130-3) angeordnet werden kann, wobei das Bestimmen der Anordnungspositionsinformationen zumindest teilweise basierend auf den geospatialen Informationen erfolgt;
- Bestimmen von Wakeverlustinformationen indikativ für Windschatteneffekte durch eine gegenseitige Abschattung der Vielzahl von Windenergieanlagen (130-1, 130-2, 130-3), wobei die Wakeverlustinformationen zumindest teilweise basierend auf den geospatialen Informationen und den Anordnungspositionsinformationen bestimmt werden;
- Bestimmen von einer Strukturinformation indikativ für ein oder mehrere Strukturelemente für eine Windenergieanlage (130-1, 130-2, 130-3), wobei ein jeweiliges Strukturelement ein Element von einer Windenergieanlage (130-1, 130-2, 130-3) charakterisiert, wobei die Windenergieanlage (130-1, 130-2, 130-3) zum Einsatz auf der Fläche (140) geeignet ist, wobei die Strukturinformation zumindest teilweise basierend auf den geospatialen Informationen, den Anordnungspositionsinformationen, und den Wakeverlustinformationen bestimmt wird; und
- Ermitteln einer Anordnung der Vielzahl von Windenergieanlagen (130-1, 130-2, 130-3) auf der Fläche (140), wobei eine Nabenhöhe von einer jeweiligen der Vielzahl von Windenergieanlagen (130-1, 130-2, 130-3) umfassten Windturbine unter Maximierung einer von den jeweiligen Windturbinen der Vielzahl von Windenergieanlagen (130-1, 130-2, 130-3) erzeugten Menge elektrischer Energie basierend auf der Windzustandsinformation und einer Maximierung von einheitlichen verwendeten Strukturelementen, die von einer jeweiligen der Vielzahl der Windenergieanlagen (130-1, 130-2, 130-3) umfasst sind, bestimmt wird, und wobei das Ermitteln der Anordnung von der Vielzahl von Windenergieanlagen (130-1, 130-2, 130-3) auf der Fläche (140) ferner unter Minimierung der absoluten Nabenhöhe der jeweiligen Windenergieanlage (130-1, 130-2, 130-3) der Vielzahl von Windenergieanlagen (130-1, 130-2, 130-3) erfolgt.

2.    Verfahren nach Anspruch 1, ferner umfassend:

- Bestimmen einer Normwindinformation indikativ für den Fall, dass sämtliche Windenergieanlagen (130-1, 130-2, 130-3) der Vielzahl von Windenergieanlagen (130-1, 130-2, 130-3) auf der Fläche (140) eine identische Nabenhöhe aufweisen, wobei die Wakeverlustinformationen ferner zumindest teilweise basierend auf der Normwindinformation bestimmt werden.

3.    Verfahren nach einem der vorhergehenden Ansprüche, wobei das Ermitteln der Anordnung von der Vielzahl von Windenergieanlagen (130-1, 130-2, 130-3) auf der Fläche (140) ferner unter Minimierung einer gegenseitigen Beeinflussung der Windenergieanlagen (130-1, 130-2, 130-3) erfolgt.

4. Verfahren nach einem der vorhergehenden Ansprüche, wobei das Ermitteln der Anordnung von der Vielzahl von Windenergieanlagen (130-1, 130-2, 130-3) auf der Fläche (140) ferner unter Maximierung von einem oder mehreren identischen Strukturelementen der jeweiligen Windenergieanlage (130-1, 130-2, 130-3) der Vielzahl von Windenergieanlagen (130-1, 130-2, 130-3) auf der Fläche (140) erfolgt.

5. Verfahren nach Anspruch 4, wobei das eine oder die mehreren identischen Strukturelemente der jeweiligen Windenergieanlage (130-1, 130-2, 130-3) der Vielzahl von Windenergieanlagen (130-1, 130-2, 130-3) primär ein identischer Turm und/oder ein identisches Fundament der jeweiligen der Vielzahl von Windenergieanlagen (130-1, 130-2, 130-3) sind.

6. Verfahren nach Anspruch 5, wobei das eine oder die mehreren identischen Strukturelemente der jeweiligen Windenergieanlagen (130-1, 130-2, 130-3) der Vielzahl von Windenergieanlagen (130-1, 130-2, 130-3) sekundär eine identische Gründung der jeweiligen der Vielzahl von Windenergieanlagen (130-1, 130-2, 130-3) ist.

7. Verfahren nach einem der vorhergehenden Ansprüche, wobei zumindest eine Windenergieanlage (130-1, 130-2, 130-3) der Vielzahl von Windenergieanlagen (130-1, 130-2, 130-3) eine Windenergieanlage (130-1, 130-2, 130-3) ohne außenliegende Arbeitsplattform ist.

8. Verfahren nach einem der vorhergehenden Ansprüche, wobei zumindest eine Windenergieanlage (130-1, 130-2, 130-3) der Vielzahl von Windenergieanlagen (130-1, 130-2, 130-3) eine Windenergieanlage (130-1, 130-2, 130-3) mit einer Monopile-Gründung ist, wobei die Monopile-Gründung eine Manschette umfasst, wobei die Manschette die Monopile-Gründung umschließt und ferner zumindest teilweise in den Meeresboden eingelassen ist.

9. Verfahren nach einem der vorhergehenden Ansprüche, wobei zumindest eine Windenergieanlage (130-1, 130-2, 130-3) der Vielzahl von Windenergieanlagen (130-1, 130-2, 130-3) eine Windenergieanlage (130-1, 130-2, 130-3) mit einer Jacket-Gründung ist.

10. Verfahren nach einem der vorhergehenden Ansprüche, wobei ein jeweiliger Turm der Vielzahl von Windenergieanlagen (130-1, 130-2, 130-3) im Wesentlichen einen identischen Durchmesser aufweist.

11. Verfahren nach einem der vorhergehenden Ansprüche, wobei zumindest eine Windenergieanlage (130-1, 130-2, 130-3) der Vielzahl von Windenergieanlagen (130-1, 130-2, 130-3) einen Kolkschutz aufweist.

12. Vorrichtung (110, 300) eingerichtet zur Ausführung und/oder Steuerung des Verfahrens nach einem der Ansprüche 1 bis 11 oder umfassend jeweilige Mittel zur Ausführung und/oder Steuerung der Schritte des Verfahrens nach einem der Ansprüche 1 bis 11.

13. System (100), umfassend eine oder mehrere Vorrichtungen (110, 300), die eingerichtet sind zur Ausführung und/oder Steuerung des Verfahrens nach einem der Ansprüche 1 bis 11 oder Mittel zur Ausführung und/oder Steuerung der Schritte des Verfahrens nach einem der Ansprüche 1 bis 11 aufweisen.

14. Computerprogramm, umfassend Programmanweisungen, die einen Prozessor (310) zur Ausführung und/oder Steuerung des Verfahrens gemäß einem der Ansprüche 1 bis 11 veranlassen, wenn das Computerprogramm auf dem Prozessor (310) läuft.

## Claims

1. A method for optimizing an arrangement of a plurality of wind turbines (130-1, 130-2, 130-3), comprising:

   - gathering geospatial information indicative of one or more conditions of an area (140) on which a plurality of wind turbines (130-1, 130-2, 130-3) are to be located, wherein the geospatial information comprises at least a wind condition information, wherein the geospatial information is determined in the context of a bathymetry representing natural elevations or lowering within the area (140);
   - determining an arrangement position information indicative of locations within the area (140) where a particular wind turbine (130-1, 130-2, 130-3) of the plurality of wind turbines (130-1, 130-2, 130-3) is enabled to be arranged, wherein the determining of the arrangement position information is at least partially based on the geospatial information;

- determining wake loss information indicative of slipstream effects due to mutual shading of the plurality of wind turbines (130-1, 130-2, 130-3), wherein the wake loss information is determined at least partially based on the geospatial information and the arrangement position information;

- determining structural information indicative of one or more structural elements for a wind turbine (130-1, 130-2, 130-3), wherein each structural element characterizes an element of a wind turbine (130-1, 130-2, 130-3), wherein the wind turbine (130-1, 130-2, 130-3) is suitable for use within the area (140), wherein the structural information is determined based at least in part on the geospatial information, the arrangement position information, and the wake loss information; and

- determining an arrangement of the plurality of wind turbines within the area, wherein a hub height of a respective wind turbine of the plurality of wind is determined while maximizing an amount of electrical energy generated by the respective wind turbine of the plurality of wind turbines and while maximizing uniformly used structural elements to be comprised by each of plurality of wind turbines (130-1, 130-2, 130-3), 130-2, 130-3), and wherein the determining of the arrangement of the plurality of wind turbines (130-1, 130-2, 130-3) on the area (140) is further performed by minimizing the absolute hub height of the respective wind turbine (130-1, 130-2, 130-3) of the plurality of wind turbines (130-1, 130-2, 130-3).

2. The method according to claim 1, further comprising:

- determining standard wind information indicative for the case that all wind turbines (130-1, 130-2, 130-3) of the plurality of wind turbines (130-1, 130-2, 130-3) have an identical hub height within the area (140), wherein the wake loss information is further determined at least partially based on the standard wind information.

3. The method according to one of the preceding claims, wherein the determining of the arrangement of the plurality of wind turbines (130-1, 130-2, 130-3) within the area (140) is further performed while minimizing mutual interference between the wind turbines (130-1, 130-2, 130-3).

4. The method according to any one of the preceding claims, wherein the determining of the arrangement of the plurality of wind turbines (130-1, 130-2, 130-3) within the area (140) is further performed while maximizing one or more the uniformly used structural elements of the respective wind turbine (130-1, 130-2, 130-3) of the plurality of wind turbines (130-1, 130-2, 130-3).

5. The method according to claim4, wherein the one or more uniformly used structural elements of the respective wind turbine (130-1, 130-2, 130-3) of the plurality of wind turbines (130-1, 130-2, 130-3) are primarily an identical tower and/or an identical foundation of the respective wind turbine (130-1, 130-2, 130-3) of the plurality of wind turbines (130-1, 130-2, 130-3).

6. The method of claim 5, wherein the one or more uniformly used structural elements of the respective wind turbine (130-1, 130-2, 130-3) of the plurality of wind turbines (130-1, 130-2, 130-3) are secondarily an identical footing of the respective wind turbine (130-1, 130-2, 130-3) of the plurality of wind turbines (130-1, 130-2, 130-3).

7. The method according to any one of the preceding claims, wherein at least one wind turbine (130-1, 130-2, 130-3) of the plurality of wind turbines (130-1, 130-2, 130-3) is a wind turbine (130-1, 130-2, 130-3) without an external working platform.

8. The method according to any one of the preceding claims, wherein at least one wind turbine(130-1, 130-2, 130-3) of the plurality of wind turbines (130-1, 130-2, 130-3) is a wind turbine (130-1, 130-2, 130-3) having a monopile footing, wherein the monopile footing comprises a sleeve surrounding the monopile footing and further being at least partially embedded in the seabed.

9. The method according to any one of the preceding claims, wherein at least one wind turbine (130-1, 130-2, 130-3) of the plurality of wind turbines (130-1, 130-2, 130-3) is a wind turbine (130-1, 130-2, 130-3) with a jacket footing.

10. The method according to any one of the preceding claims, wherein each respective tower of the plurality of wind turbines (130-1, 130-2, 130-3) has substantially an identical diameter.

11. The method according to any one of the preceding claims, wherein at least one wind turbine (130-1, 130-2, 130-3) of the plurality of wind turbines (130-1, 130-2, 130-3) has a scour protection.

12. An apparatus (110, 300) configured to perform and/or control the method according to any of the claims 1 to 11 or comprising respective means for performing and/or controlling the steps of the method of any of the claims 1 to 11.

13. A system (100) comprising one or more apparatuses (110, 300) configured to perform and/or control the method according to any of the claims 1 to 12 or comprising respective means performing and/or controlling the steps of the method according to any of the claims 1 to 11.

14. A computer program comprising program instructions causing a processor (310) to perform and/or control the method according to any of the claims 1 to 11 when the computer program is executed by the processor (310).

**Revendications**

1. Procédé d'optimisation d'agencement d'une pluralité d'installations d'énergie éolienne (130-1, 130-2, 130-3), comprenant :

   - acquérir des informations géospatiales indicatives d'une ou plusieurs conditions d'une surface (140) sur laquelle une pluralité d'installations d'énergie éolienne (130-1, 130-2, 130-3) doivent être disposées, les informations géospatiales comprenant au moins une informations d'état de vent, les informations géospatiales étant déterminées dans le cadre d'une bathymétrie représentant des élévations ou des dépressions naturelles à l'intérieur de la surface (140) ;
   - déterminer des informations de position d'agencement indicatives pour des emplacements à l'intérieur de la surface (140) où une installation d'énergie éolienne respective (130-1, 130-2, 130-3) de la pluralité d'installations d'énergie éolienne (130-1, 130-2, 130-3) peut être agencée, dans lequel la détermination des informations de position d'agencement est effectuée au moins en partie sur la base des informations géospatiales ;
   - déterminer des informations de perte de sillage indicatives d'effets d'ombre de vent dus à une ombre mutuelle de la pluralité d'installations d'énergie éolienne (130-1, 130-2, 130-3), dans lequel les informations de perte de sillage sont déterminées au moins en partie sur la base des informations géospatiales et des informations de position d'agencement ;
   - déterminer une information structurelle indicative d'un ou plusieurs éléments structurels pour une d'installation d'énergie éolienne (130-1, 130-2, 130-3), un élément structurel respectif caractérisant un élément d'une d'installations d'énergie éolienne (130-1, 130-2, 130-3), l' d'installations d'énergie éolienne (130-1, 130-2, 130-3) étant adaptée pour être utilisée sur la surface (140), les informations structurelles étant déterminées au moins en partie sur la base des informations géospatiales, des informations de position d'agencement et des informations de perte de sillage ; et
   - déterminer un agencement de la pluralité d'installations d'énergie éolienne (130-1, 130-2, 130-3) sur la surface (140), une hauteur de moyeu d'une turbine à vent d'une installation d'énergie éolienne respective de la pluralité d'installations d'énergie éolienne (130-1, 130-2, 130-3) étant déterminée en maximisant une quantité de d'énergie électrique produite par les turbines à vent respectives de la pluralité d'installations d'énergie éolienne (130-1, 130-2, 130-3) sur la base de l'information d'état de vent et en maximisant des éléments structurels uniformément utilisés, lesquels éléments structurels sont compris par une éolienne respective parmi la pluralité d'installations d'énergie éolienne (130-1, 130-2, 130-3), et
   - où la détermination de l'agencement de la pluralité d'installations d'énergie éolienne (130-1, 130-2, 130-3) sur la surface (140) est effectuée en outre en minimisant la hauteur absolue de moyeu de l'installation d'énergie éolienne respective (130-1, 130-2, 130-3) de la pluralité d'installations d'énergie éolienne (130-1, 130-2, 130-3).

2. Procédé selon la revendication 1, comprenant en outre :

   - déterminer une information de vent de norme indicative pour le cas où toutes les installations d'énergie éolienne (130-1, 130-2, 130-3) de la pluralité d'installations d'énergie éolienne (130-1, 130-2, 130-3) sur la surface (140) ont une hauteur de moyeu identique, les informations de perte de sillage étant en outre déterminées au moins en partie sur la base des informations de vent de norme.

3. Procédé selon l'une des revendications précédentes, dans lequel la détermination de l'agencement de la pluralité d'installations d'énergie éolienne (130-1, 130-2, 130-3) sur la surface (140) s'effectue en outre en minimisant une influence mutuelle des installations d'énergie éolienne (130-1, 130-2, 130-3).

4. Procédé selon l'une quelconque des revendications précédentes, dans lequel la détermination de l'agencement de la pluralité d'installations d'énergie éolienne (130-1, 130-2, 130-3) sur la surface (140) est en outre effectuée en maximisant un ou plusieurs éléments structurels identiques de l'installation d'énergie éolienne respective (130-1, 130-2, 130-3) de la pluralité d'installations d'énergie éolienne (130-1, 130-2, 130-3) sur la surface (140).

5. Procédé selon la revendication4, dans lequel l'un ou les plusieurs éléments structurels identiques de l'installation d'énergie éolienne respective (130-1, 130-2, 130-3) de la pluralité d'installations d'énergie éolienne (130-1, 130-2, 130-3) sont primairement une tour identique et/ou un fondement identique de l'installation d'énergie éolienne respective de la pluralité d'installations d'énergie éolienne (130-1, 130-2, 130-3).

6. Procédé selon la revendications, dans lequel l'un ou les plusieurs éléments structurels identiques des installations d'énergie éolienne respectives (130-1, 130-2, 130-3) de la pluralité d'installations d'énergie éolienne (130-1, 130-2, 130-3) sont secondairement une fondation identique des installations d'énergie éolienne respectives de la pluralité d'installations d'énergie éolienne (130-1, 130-2, 130-3).

7. Procédé selon l'une quelconque des revendications précédentes, dans lequel au moins une installation d'énergie éolienne (130-1, 130-2, 130-3) de la pluralité d'installations d'énergie éolienne (130-1, 130-2, 130-3) est une installation d'énergie éolienne (130-1, 130-2, 130-3) sans plate-forme de travail extérieure.

8. Procédé selon l'une quelconque des revendications précédentes, dans lequel au moins une installation d'énergie éolienne (130-1, 130-2, 130-3) de la pluralité d'installations d'énergie éolienne (130-1, 130-2, 130-3) est une installation d'énergie éolienne (130-1, 130-2, 130-3) ayant une fondation monopile, la fondation monopile comprenant un manchon, le manchon entourant la fondation monopile et étant en outre au moins partiellement enfoncé dans le fond marin.

9. Procédé selon l'une quelconque des revendications précédentes, dans lequel au moins une installation d'énergie éolienne (130-1, 130-2, 130-3) de la pluralité d'installations d'énergie éolienne (130-1, 130-2, 130-3) est une installation d'énergie éolienne (130-1, 130-2, 130-3) avec une fondation de type jacket.

10. Procédé selon l'une quelconque des revendications précédentes, dans lequel une tour respective de la pluralité d'installations d'énergie éolienne (130-1, 130-2, 130-3) a un diamètre sensiblement identique.

11. Procédé selon l'une quelconque des revendications précédentes, dans lequel au moins une installation d'énergie éolienne (130-1, 130-2, 130-3) de la pluralité d'installations d'énergie éolienne (130-1, 130-2, 130-3) comporte une protection contre le colmatage.

12. Dispositif (110, 300) configuré pour la mise en oeuvre et/ou la commande du procédé selon l'une quelconque des revendications 1 à 11 ou comprenant des moyens respectifs pour la mise en oeuvre et/ou la commande des étapes du procédé selon l'une quelconque des revendications 1 à 11.

13. Système (100) comprenant un ou plusieurs dispositifs (110, 300) configurés pour la mise en oeuvre et/ou la commande du procédé selon l'une des revendications 1 à 11 ou comportant des moyens pour la mise en oeuvre et/ou la commande des étapes du procédé selon l'une des revendications 1 à 11.

14. Programme informatique comprenant des instructions de programme qui amènent un processeur (310) à exécuter et/ou à commander le procédé selon l'une quelconque des revendications 1 à 11, lorsque le programme informatique est exécuté sur le processeur (310).

Fig.1

Fig.2

300

320 — Arbeits-speicher    Programm-speicher — 330

350 — Sensor(en)    Prozessor — 310

Kommunikations-schnittstelle — 340

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2463794 A1

- US 2010138201 A1